# DEMANDE DE BREVET EUROPEEN

(11) **EP 4 170 310 A1**
(43) Date de publication de la demande: **26.04.2023**
(21) Numéro de dépôt: 22202731.0
(22) Date de dépôt: 20.10.2022
(51) Int. Cl.: G01L 19/00, G01L 19/08, G01L 19/12

(54) **DISPOSITIF DE MESURE DE PRESSION ET SYSTÈME ASSOCIÉ**

(30) Priorité: 20.10.2021 FR 2111119
(71) Demandeur: Lacroix Group, 44800 Saint Herblain (FR)
(72) Inventeur: FAURANT, Nicolas, 35770 Vern sur Seiche (FR); GOURON, Franck, 35770 Vern sur Seiche (FR); NAUDIN, Julien, 35770 Vern sur Seiche (FR)
(74) Mandataire: Lavoix

(57) **Abrégé**

Ce dispositif de mesure de pression (14) configuré pour déterminer une information de pression calculée comprend une cellule de mesure de pression (20), configurée pour acquérir des données de pression, une unité de communication (38) destinée à communiquer avec un dispositif de surveillance de pression (16) et un boitier (18).

Le dispositif de mesure de pression (14) comprend un module de calcul (22), configuré pour déterminer l'information de pression calculée à partir des données de pression acquises, et un module de gestion (24). Le module gestion (24) est configuré pour transmettre l'information de pression calculée à l'unité de communication (38) seulement lorsque le module de gestion vérifie une condition de validation, l'unité de communication (38) étant configurée pour communiquer l'information de pression calculée au dispositif de surveillance (16) de pression seulement lorsque la condition de validation est vérifiée par le module de gestion (24).

## Description

La présente invention concerne un dispositif de mesure de pression configuré pour déterminer une information de pression calculée relative à la pression d'un fluide contenu et/ou circulant dans une conduite de contention de fluide, le dispositif de mesure comprenant :
- une cellule de mesure de pression, configurée pour acquérir des données de pression du fluide circulant dans la conduite de contention de fluide ;
- une unité de communication destinée à communiquer avec un dispositif de surveillance de pression ; et
   un boitier.

Dans le milieu des conduites de contention de fluide, telles par exemple les canalisations d'eau souterraines, il est connu d'utiliser des dispositifs de mesure de pression.

De tels dispositifs de mesure de pression sont généralement associés à un dispositif de surveillance de pression. Cette association permet par exemple de s'assurer que la pression effective du fluide dans une conduite de contention dudit fluide correspond à une valeur attendue de pression du fluide. La détection de tout écart entre une pression mesurée et une pression attendue du fluide peut être par exemple utilisée dans le cadre d'un asservissement de la pression, de la mesure de la qualité de service ou encore de la signalisation d'une anomalie associée à la pression du fluide.

Les dispositifs de mesure de pression connus comportent généralement une cellule de mesure de pression, permettant d'acquérir des données de pression du fluide circulant dans la conduite de contention de fluide et une unité de communication communiquant ladite donnée de pression à un dispositif de surveillance de pression.

Le dispositif de surveillance de pression est alors configuré pour interpréter chaque donnée de pression et pour déterminer une information de pression calculée à partir de la donnée communiquée par le dispositif de mesure de pression.

Un tel dispositif de mesure n'est alors pas entièrement satisfaisant. En effet un tel dispositif de mesure doit obligatoirement communiquer ses données de pression vers le dispositif de surveillance de pression pour assurer un traitement de ces données, avec un risque de ne pas prendre en considération des phénomènes rapides. Un système de surveillance de pression comprenant un tel dispositif de mesure est en outre énergivore à cause du volume de données transmises entre le dispositif de mesure et le dispositif de surveillance.

L'un des buts de l'invention est alors de fournir un dispositif de mesure permettant de former un système de surveillance de pression économe en énergie.

A cet effet, l'invention a pour objet un dispositif de mesure de pression tel que précité, dans lequel le dispositif de mesure de pression comprend :
- un module de calcul, configuré pour déterminer l'information de pression calculée à partir des données de pression acquises, et
- un module de gestion, configuré pour acquérir l'information de pression calculée déterminée par le module de calcul,
   le module gestion étant configuré pour transmettre l'information de pression calculée à l'unité de communication seulement lorsque le module de gestion vérifie une condition de validation,

l'unité de communication étant configurée pour communiquer l'information de pression calculée au dispositif de surveillance de pression seulement lorsque la condition de validation est vérifiée par le module de gestion,

la cellule de mesure, le module de calcul et le module de gestion étant disposés dans le boitier.

Un dispositif de mesure de pression comprenant un module de calcul configuré pour déterminer l'information de pression calculée à partir des données de pression acquises, un module de gestion vérifiant une condition de validation et une unité de communication configurée pour communiquer l'information de pression calculée au dispositif de surveillance de pression seulement lorsque la condition de validation est vérifiée par le module de gestion est particulièrement avantageux puisqu'il permet à l'unité de communication de ne communiquer que dans certaines situations. Un tel dispositif est donc très économe en énergie.

Suivant des modes de réalisation particuliers, le dispositif de mesure de pression comprend une ou plusieurs des caractéristiques suivantes, prise(s) isolément ou suivant toutes les combinaisons techniquement possibles :
- le module de gestion vérifie la condition de validation seulement :
   - lorsque le module de gestion détermine que l'information de pression calculée est conforme à au moins un critère principal prédéterminé ; et/ou
   - lorsque le module de gestion reçoit une commande de validation de la part du dispositif de surveillance de pression par l'intermédiaire de l'unité de communication ;
- le dispositif de mesure comprend un module de stockage, le module de stockage étant configuré pour stocker l'information de pression calculée déterminée par le module de calcul et/ou les données de pression du fluide acquises par la cellule de mesure de pression ;
- l'acquisition des données de pression par la cellule de mesure de pression dépend de l'information de pression calculée et/ou de la vérification de la condition de validation ;
- la fréquence d'acquisition des données de pression par la cellule de mesure de pression dépend de l'information de pression calculée et/ou de la vérification de la condition de validation, la fréquence d'acquisition de données étant limitée à une fréquence d'acquisition maximale égale à 300 Hz ;
- le dispositif de mesure comprend une unité d'alimentation, le module de gestion étant configuré pour commander la fourniture d'une alimentation électrique dudit dispositif de mesure par l'unité d'alimentation en fonction de l'information de pression calculée et/ou de la vérification de la condition de validation ;
- l'unité de communication est configurée pour communiquer avec le dispositif de surveillance en utilisant une interface comprise dans la liste consistant en : interface filaire RS485, interface radio LORA, interface radio Sigfox et interface radio cellulaire ;
- le boitier est un boitier étanche ; et
- l'information de pression calculée comprend:
   - une valeur de pression minimale acquise et/ou maximale acquise; et/ou
   - une moyenne de pression acquise; et/ou
   - une valeur booléenne résultant du franchissement de la pression acquise d'un seuil de pression prédéterminé ; et/ou
   - une valeur représentative d'une variation de la pression acquise.

L'invention concerne en outre un système de surveillance de pression comprenant un dispositif de mesure de pression tel que précité et un dispositif de surveillance de pression, le module de gestion du dispositif de mesure de pression transmettant l'information de pression calculée à l'unité de communication du dispositif de mesure de pression seulement lorsque le module de gestion vérifie une condition de validation, l'unité de communication communiquant l'information de pression calculée au dispositif de surveillance de pression seulement lorsque la condition de validation est vérifiée par le module de gestion.

D'autres caractéristiques et avantages de l'invention apparaîtront à la lecture de la description qui suit de modes de réalisation de l'invention, donnés à titre d'exemple uniquement et en référence aux dessins qui sont :
[Fig 1], Figure 1, une représentation schématique d'un système de surveillance de pression comprenant un dispositif de mesure de pression selon l'invention ; et
[Fig 2], Figure 2, une autre représentation schématique du système de surveillance de pression de la figure 1.

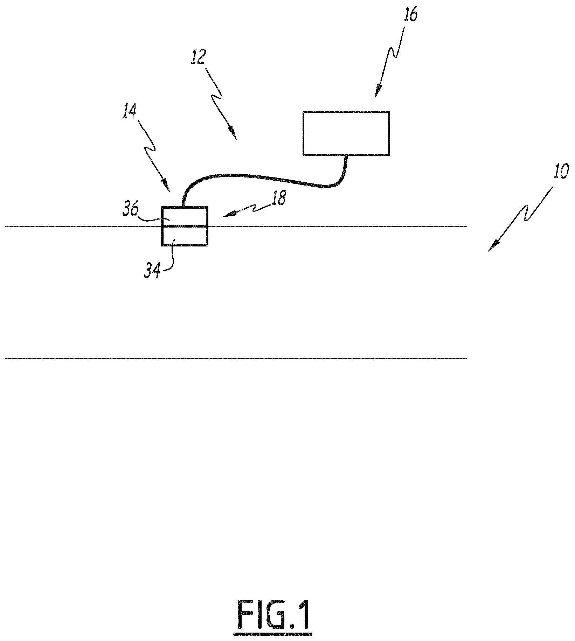

En référence à la figure 1, une conduite de contention de fluide 10 est équipée d'un système de surveillance de pression 12.

La conduite de contention de fluide 10 est configurée pour contenir et/ou transporter un fluide.

La conduite de contention de fluide 10 est par exemple une canalisation d'eau, et par exemple une canalisation d'eau potable. Le fluide est alors un liquide et plus particulièrement de l'eau, par exemple potable.

La conduite de contention de fluide 10 présente par exemple un diamètre compris entre 30mm et 300mm.

Comme visible sur la figure 1, le système de surveillance de pression 12 comprend un dispositif de mesure de pression 14 et un dispositif de surveillance de pression 16.

Le système de surveillance de pression 12 est configuré pour surveiller la pression du fluide contenu et/ou circulant dans la conduite de contention de fluide 10.

Le système de surveillance de pression 12 est par exemple connecté à un réseau de surveillance de pression (non représenté), le réseau de surveillance de pression connectant par exemple le système de surveillance de pression 12 à une station de contrôle (non représentée).

Le dispositif de surveillance de pression 16 est par exemple connecté au réseau de surveillance de pression. Le dispositif de surveillance de pression 16 est par exemple un enregistreur de données ou en anglais un « datalogger ».

Le dispositif de mesure de pression 14 est configuré pour déterminer une information de pression calculée relative à la pression du fluide contenu et/ou circulant dans la conduite de contention de fluide 10.

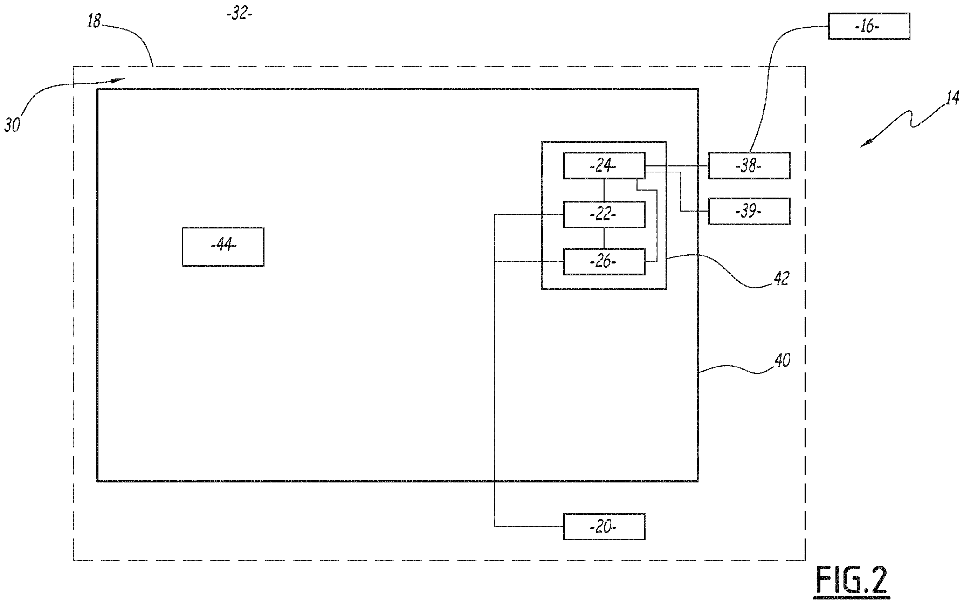

Comme illustré en figure 2, le dispositif de mesure de pression 14 comprend un boitier 18, une cellule de mesure de pression 20, un module de calcul 22, configuré pour déterminer l'information de pression calculée relative à la pression du fluide circulant dans la conduite 10 de contention de fluide, un module de gestion 24, et une unité de communication 38. Le dispositif de mesure de pression 14 comprend en outre de préférence un module de stockage 26 et une unité d'alimentation 39.

Le boitier 18 définit un volume intérieur 30 isolé d'un extérieur 32 du boitier. La cellule de mesure de pression 20, le module de calcul 22 et le module de gestion 24 sont disposés dans le boitier 18 et s'étendent alors dans le volume intérieur 30.

Comme illustré en figure 2, la cellule de mesure de pression 20 s'étend par exemple dans le boitier 18 de sorte à définir, conjointement avec le boitier 18, le volume intérieur 30.

Le cas échéant, le module de stockage 26 est de préférence lui aussi disposé dans le boitier 18, ou en d'autres termes, s'étend dans le volume intérieur 30.

Le boitier 18 est par exemple destiné à être en contact avec de l'eau potable et est de préférence conforme aux normes sanitaires relatives aux dispositifs destinés à être en contact avec de l'eau potable.

Le boitier 18 est un boitier étanche. L'indice de protection du boitier 18 selon la norme EN 60529 est par exemple supérieur à IP66, de préférence égale à IP68 et par exemple IP68 dans des conditions d'immersion sous 2m d'eau pendant 200 jours. On comprendra ici que lorsque la cellule de mesure de pression 20 est logée dans le boitier 18 pour définir le volume intérieur 30 tel qu'illustré en figure 1, le boitier 18 est étanche conjointement avec la cellule de mesure de pression 20, le volume intérieur 30 étant alors protégé de l'extérieur 32 du boitier 18.

Dans l'exemple de la figure 1, au moins une portion du boitier 18, appelée portion interne 34, s'étend dans la conduite de contention de fluide 10 et au moins une portion du boitier 18, appelée portion externe 36, s'étend hors de la conduite de contention de fluide 10.

Dans une variante alternative (non représentée) l'ensemble du boitier 18 est disposé dans la conduite de contention de fluide.

Dans une autre variante alternative, le boitier 18 est disposé hors de la conduite de contention de fluide. Selon une telle variante, le boitier 18 est par exemple disposé sur la conduite de contention de fluide 10 de sorte à ce que la cellule de mesure de pression 20 s'étende en regard d'un orifice de la conduite débouchant dans la conduite de contention de fluide 10.

La cellule de mesure de pression 20 est destinée à être au moins partiellement en contact avec le fluide circulant dans la conduite de contention de fluide 10. La cellule de mesure de pression 20 est configurée pour acquérir des données de pression du fluide circulant dans la conduite de contention de fluide 10.

La cellule de mesure de pression 20 est par exemple configurée pour acquérir des données de pression comprises entre 1 bar et 20 bar.

La donnée de pression est une donnée de pression brute issue de la cellule de mesure de pression 20. En d'autres termes, la donnée de pression n'est pas traitée et correspond à la pression acquise par la cellule de mesure de pression 20 en un instant temporel donné.

L'acquisition des données de pression par la cellule de mesure de pression 20 dépend par exemple de l'information de pression calculée déterminée par le module de calcul 22 et/ou de la vérification, par le module de gestion 24, d'une condition de validation qui sera décrite en détail dans la suite de cette description.

La fréquence d'acquisition de données de pression par la cellule de mesure de pression 20 dépend par exemple de l'information de pression calculée déterminée par le module de calcul 22 et/ou de la vérification, par le module de gestion 24, de la condition de validation décrite en détail dans la suite de cette description. La fréquence d'acquisition de données de pression par la cellule de mesure de pression 20 augmente par exemple lorsque la condition de validation est vérifiée par le module de gestion 24.

La fréquence d'acquisition de données de pression par la cellule de mesure de pression 20 est de préférence limitée à une fréquence d'acquisition maximale. La fréquence d'acquisition maximale est par exemple égale à 300 Hz.

Le module de calcul 22 est configuré pour déterminer l'information de pression calculée à partir des données de pression acquises par la cellule de mesure de pression 20.

Le module de calcul 22 est configuré pour transmettre l'information de pression calculée au module de gestion 24, le module de gestion 24 étant alors configuré pour acquérir l'information de pression calculée déterminée par le module de calcul 22.

Le module gestion 24 est configuré pour transmettre l'information de pression calculée à l'unité de communication 38 seulement lorsque le module de gestion vérifie la condition de validation.

La condition de validation est par exemple seulement vérifiée par le module de gestion 24 lorsque le module de gestion 24 détermine que l'information de pression calculée est conforme à au moins un critère principal prédéterminé et/ou lorsque le module gestion 24 reçoit une commande de validation de la part du dispositif de surveillance de pression 16 par l'intermédiaire de l'unité de communication 38.

L'information de pression calculée comprend par exemple une valeur de pression minimale acquise et/ou une valeur de pression maximale acquise. La valeur de pression minimale et/ou maximale acquise correspond par exemple à la valeur minimale et/ou maximale acquise par la cellule de mesure de pression 20 sur une fenêtre temporelle donnée.

Le critère principal prédéterminé comprend alors par exemple la vérification d'une inégalité dans laquelle la valeur de pression minimale acquise est inférieure à une valeur de pression minimale seuil et/ou dans laquelle la valeur de pression maximale acquise est supérieure à une valeur de pression maximale seuil.

En alternative, ou en complément, l'information de pression calculée comprend une moyenne de pression acquise. La moyenne de pression acquise correspond par exemple à une moyenne des valeurs acquises par la cellule de mesure de pression 20 sur une fenêtre temporelle donnée.

Le critère principal prédéterminé comprend alors par exemple la vérification d'une inégalité dans laquelle la moyenne de pression est inférieure à un seuil moyen inférieur et/ou est supérieure à un seuil moyen supérieur.

En alternative, ou en complément, l'information de pression calculée comprend une valeur booléenne résultant du franchissement de la pression acquise par la cellule de mesure de pression 20 d'un seuil de pression prédéterminé.

Le critère principal prédéterminé comprend par exemple la vérification d'une égalité entre ladite valeur booléenne et une valeur booléenne prédéterminée.

En alternative, ou en complément, l'information de pression calculée comprend une valeur représentative d'une variation de la pression acquise. La valeur représentative d'une variation de pression acquise correspond par exemple à la dérivée temporelle, en un instant temporel, de la donnée de pression du fluide acquise par la cellule de mesure 20. En alternative, la valeur représentative d'une variation de pression acquise correspond par exemple à la moyenne de la dérivée temporelle, sur une fenêtre temporelle donnée, de la donnée de pression du fluide acquise par la cellule de mesure 20.

Le critère principal prédéterminé comprend alors par exemple la vérification d'une inégalité dans laquelle la dérivée temporelle, respectivement la moyenne de la dérivée temporelle est inférieure à une valeur de dérivée temporelle maximale, respectivement inférieure à une moyenne de dérivée temporelle maximale.

En alternative, ou en complément, l'information de pression calculée comprend en outre :
- une valeur représentative d'une variation de la pression acquise complémentaire, comprenant par exemple une valeur maximale des variations croissantes et/ou décroissantes de pression acquise, par exemple un nombre de variations croissantes et/ou décroissantes ayant dépassé un seuil de variation prédéterminé ; et/ou
- une valeur représentative d'un nombre de pics de pression sur une période prédéterminée dépassant un ou plusieurs seuils préconfigurés ; et/ou
- un pourcentage de temps pendant lequel la donnée de pression acquise a dépassé un seuil prédéterminé sur une fenêtre temporelle prédéterminée ; et/ou
- une valeur booléenne résultant de la détection d'une anomalie prédéterminée, telle que par exemple un coup de bélier.

L'unité de communication 38 est configurée pour communiquer l'information de pression calculée au dispositif de surveillance 16 de pression seulement lorsque la condition de validation est vérifiée par le module de gestion 24. Le module de gestion 24 est ainsi configuré pour communiquer l'information de pression calculée par l'intermédiaire de l'unité de communication 38 lorsque le module de gestion 24 vérifie la condition de validation.

Comme vu plus haut, et dans un mode de réalisation particulier, le module gestion 24 vérifie la condition de validation lorsque le module de gestion 24 reçoit une commande de validation de la part du dispositif de surveillance de pression 16 par l'intermédiaire de l'unité de communication 38. L'unité de communication est alors configurée pour recevoir une commande de validation de la part du dispositif de surveillance de pression 16 et pour transmettre ladite commande de validation au module de gestion 24.

L'unité de communication 38 est configuré pour communiquer avec le dispositif de surveillance 16 en utilisant une interface comprise dans la liste consistant en : interface filaire RS485, interface radio LORA, interface radio Sigfox et interface radio cellulaire.

Une interface filaire RS485 est une interface filaire conforme à la norme EIA-485.

Les interfaces radio LORA (de l'anglais « long range ») et Sigfox (tiré du nom de l'opérateur réseau Sigfox) sont des interfaces radio basées sur une technique de modulation LPWAN (de l'anglais low-power wide-area network).

Le module de gestion 24 est configuré pour commander la fourniture d'une alimentation électrique du dispositif de mesure de pression 14 par l'unité d'alimentation 39.

Le module de gestion 24 est par exemple configuré pour commander la fourniture d'une alimentation électrique du dispositif de mesure 14 par l'unité d'alimentation 39 en fonction de l'information de pression déterminée par le module de calcul 22 et/ou de la vérification de la condition de validation.

Dans une variante particulière, le module de gestion 24 est par exemple configuré pour commander la fourniture d'une alimentation électrique du dispositif de mesure 14 par l'unité d'alimentation 39 plus élevée lorsque la condition de validation est vérifiée que lorsque la condition de validation n'est pas vérifiée.

Le module de gestion 24 par exemple est configuré pour commander la fourniture d'une alimentation électrique aux modules de calcul 22 et de gestion 24 par l'unité d'alimentation 39 avec une puissance moyenne comprise entre 0.03 mW et 5 mW.

Le module de gestion 24 est par exemple configuré pour commander la fourniture d'une alimentation électrique à l'unité de communication 38 uniquement lorsque la condition de validation est vérifiée.

L'unité d'alimentation 39 est par exemple connecté à un réseau d'alimentation en électricité. En variante, l'unité d'alimentation est par exemple connectée à une batterie électrique, ladite batterie électrique étant par exemple disposée dans le boitier 18.

Le module de stockage 26 est configuré pour stocker l'information de pression calculée déterminée par le module de calcul 22 et/ou les données de pression du fluide acquises par la cellule de mesure de pression 20.

Le module de stockage 26 est par exemple configuré pour stocker l'information de pression calculée déterminée par le module de calcul 22 avant la communication de l'information de pression calculée par l'unité de communication 38 vers le dispositif de surveillance de pression 16.

Le module de stockage 26 est par exemple configuré pour stocker les données de pression du fluide acquises par la cellule de mesure de pression 20 avant le calcul de l'information de pression calculée à partir des données de pression du fluide acquises par la cellule de mesure de pression 20.

Dans l'exemple de la figure 2, le dispositif de mesure de pression 14 comprend une unité de traitement d'informations 40 formée par exemple d'une mémoire électronique 42 associée à un processeur 44.

Dans l'exemple de la figure 2, le module de calcul 22, le module de gestion 24 et de préférence le module de stockage 26 sont réalisés chacun sous forme d'un logiciel exécutable par le processeur 44. La mémoire 42 est alors apte à stocker un logiciel de calcul d'une information de pression calculée, un logiciel de gestion et un logiciel de stockage de l'information de pression calculée et/ou des données de pression du fluide. Le processeur 44 de l'unité de traitement d'informations 40 est alors apte à exécuter le logiciel de calcul, le logiciel de gestion et le logiciel de stockage.

En variante non représentée, le module de calcul 22, le module de gestion 24 et de préférence le module de stockage 26 sont réalisés chacun sous forme d'un composant logique programmable, tel qu'un FPGA (de l'anglais *Field Programmable Gate Array),* ou encore sous forme d'un circuit intégré dédié, tel qu'un ASIC (de l'anglais *Application Specific Integrated Circuit).*

Lorsque le module de calcul 22, le module de gestion 24 et par exemple le module de stockage 26 sont réalisés sous forme d'un ou plusieurs logiciels, c'est-à-dire sous forme d'un programme d'ordinateur, il sont en outre aptes à être enregistrés sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est une mémoire ROM, une mémoire RAM, tout type de mémoire non volatile (par exemple EPROM, EEPROM, FLASH, NVRAM). Sur le support lisible est alors mémorisé un programme d'ordinateur comprenant des instructions logicielles.

Le fonctionnement d'un système de surveillance de pression 12 tel que précédemment présenté va maintenant être décrit.

La cellule de mesure de pression 20 acquiert des données de pression du fluide circulant dans la conduite de contention de fluide 10.

Le module de calcul 22 détermine l'information de pression calculée à partir des données de pression acquises. En particulier, le module de calcul 22 détermine l'information de pression calculée sans intervention de l'unité de communication 38. Ainsi, l'information de pression calculée est calculée au sein du dispositif de mesure de pression 14.

Le module de calcul 22 transfère l'information de pression calculée au module de gestion 24 qui acquière l'information de pression calculée.

Le module de gestion 24 attend alors la vérification de la condition de validation pour transmettre l'information de pression calculée à l'unité de communication 38.

Lorsque la condition de validation est vérifiée par le module de gestion 24, et seulement dans ce cas, c'est-à-dire seulement lorsque le module de gestion 24 détermine que l'information de pression calculée est conforme à au moins un critère principal prédéterminé et/ou lorsque le module gestion 24 reçoit une commande de validation de la part du dispositif de surveillance de pression, le module de gestion 24 transmet l'information de pression calculée à l'unité de communication 38.

L'unité de communication 38 communique alors l'information de pression calculée au dispositif de surveillance 16 de pression seulement lorsque la condition de validation est vérifiée par le module de gestion 24, ou en d'autre termes seulement lorsque le module de gestion 24 transmet l'information de pression calculée à l'unité de communication 38.

En plus d'être très économe en énergie comme vu plus haut, un dispositif de mesure de pression 14 comme précédemment décrit, par exemple par la capacité de son module de gestion à vérifier la condition de validation sur la base de l'information de pression calculée ou d'une commande de validation, facilite la surveillance de la pression du fluide dans la conduite de contention de fluide 10, en permettant d'obtenir un dispositif de mesure 14 qui soit à la fois autonome et interrogeable, tout en restant économe en énergie.

L'utilisation d'un module de stockage 26 dans le dispositif de mesure 14, est particulièrement avantageuse pour assurer l'envoi d'une information de pression calculée permettant une bonne compréhension de l'évolution de la pression dans la conduite de contention de fluide 10.

Une acquisition, par exemple une fréquence d'acquisition, des données de pression par la cellule de mesure de pression 20 dépendant de l'information de pression calculée et/ou de la vérification de la condition de validation est particulièrement avantageuse pour obtenir des mesures précises lorsque la précision de telles mesures est requise mais permet aussi d'économiser de l'énergie dans le cas contraire.

La fourniture d'une alimentation électrique du dispositif de mesure 14 en fonction de l'information de pression déterminée et/ou de la vérification de la condition de validation assure une consommation minimisée du dispositif de mesure 14 et du système de surveillance 12.

Les interfaces utilisées permettent aussi de limiter la consommation électrique du dispositif de mesure 14 et du système de surveillance 12.

L'étanchéité du boitier 18 est particulièrement avantageuse pour assurer une protection simple et efficace des modules disposés dans le boitier 18.

On comprend en particulier, par exemple, que l'acquisition des données de pression par la cellule de mesure de pression 20 dépend de l'information de pression calculée à l'aide d'au moins l'une des données de pression préalablement acquise.

La fréquence d'acquisition des données de pression par la cellule de mesure de pression 20 dépend par exemple de l'information de pression calculée à l'aide d'au moins l'une des données de pression préalablement acquise.

En outre, on comprendra que le module de gestion 24 est configuré pour commander la fourniture d'une alimentation électrique dudit dispositif de mesure 14 par l'unité d'alimentation 39 en fonction de l'information de pression calculée à l'aide d'au moins l'une des données de pression préalablement acquise et/ou de la vérification de la condition de validation.

Le module de stockage 26 est en outre par exemple configuré pour stocker l'information de pression calculée déterminée par le module de calcul 22 et/ou les données de pression du fluide acquises par la cellule de mesure de pression 20 en fonction de l'information de pression calculée à l'aide d'au moins l'une des données de pression préalablement acquise et/ou de la vérification de la condition de validation.

Dans une variante particulière, le module de stockage 26 est en outre configuré pour ne stocker qu'un sous ensemble des informations de pression calculées déterminées par le module de calcul 22 au cours du temps et/ou pour ne stocker qu'un sous ensemble des données de pression du fluide acquises par la cellule 20 au cours du temps.

Le module de stockage 26 n'est par exemple configuré pour stocker l'information de pression calculée déterminée par le module de calcul 22 et/ou les données de pression du fluide acquises par la cellule de mesure de pression 20 que lorsque le module de gestion 24 vérifie la condition de validation.

Dans une variante particulière, le module de gestion 24 est configuré pour transmettre l'information de pression calculée à l'unité de stockage 26 seulement lorsque le module de gestion 24 vérifie la condition de validation. Le module de stockage 26 stocke par exemple l'ensemble des informations de pression calculées lorsque le module de gestion 24 vérifie la condition de validation, par exemple sur une fenêtre temporelle donnée. Le module de stockage 26 ne conserve par exemple les informations de pression calculées que sur une fenêtre temporelle d'une durée minimale supérieure à 1 seconde, par exemple supérieure à 1 heure, par exemple supérieure à 1 jour, par exemple supérieure à 1 mois.

En complément, le module de gestion 24 est par exemple configuré pour en outre transmettre au module de stockage 26 les données de pression à partir desquelles l'information de pression calculée est déterminée. L'unité de communication 38 est alors par exemple configurée pour communiquer les données de pression et l'information de pression stockées sur le module de stockage 26 lorsque la condition de validation est vérifiée par le module de gestion 24.

Dans une variante particulière, le module de gestion 24 est configuré pour vérifier une pluralité de conditions de validation, telles que précitées, distinctes. Une première des conditions de validation est par exemple une condition de stockage et une seconde des conditions est par exemple une condition de transmission.

Selon cette variante, le module de gestion 24 est par exemple configuré pour transmettre l'information de pression calculée au module de stockage 26 seulement lorsque le module de gestion 24 vérifie la condition de stockage. Le module de gestion 24 est par exemple en outre configuré pour transmettre l'information de pression calculée à l'unité de communication 38 seulement lorsque le module de gestion 24 vérifie la condition de transmission. L'unité de communication 38 est alors par exemple configurée pour communiquer l'information de pression calculée, stockée sur le module de stockage 26, au dispositif de surveillance 16 seulement lorsque le module de gestion 24 vérifie la condition de transmission.

Par exemple, et en complément, le module de gestion est configuré pour communiquer au dispositif de surveillance 16 l'information de pression calculée, stockée sur le module de stockage 26 ainsi qu'au moins une information de pression calculée supplémentaire, par exemple antérieure, elle aussi stockée sur le module de stockage 26, seulement lorsque le module de gestion 24 vérifie la condition de transmission.

## Revendications

1. Dispositif de mesure de pression (14) configuré pour déterminer une information de pression calculée relative à la pression d'un liquide contenu et/ou circulant dans une canalisation d'eau (10), le dispositif de mesure (14) comprenant :
- une cellule de mesure de pression (20), configurée pour acquérir des données de pression du liquide circulant dans la canalisation d'eau (10) ;
- une unité de communication (38) destinée à communiquer avec un dispositif de surveillance de pression (16) ; et
- un boitier (18) ;
**caractérisé en ce que** le dispositif de mesure de pression (14) comprend :
- un module de calcul (22), configuré pour déterminer l'information de pression calculée à partir des données de pression acquises, l'information de pression calculée comprenant une valeur représentative d'une variation de la pression acquise, et
- un module de gestion (24), configuré pour acquérir l'information de pression calculée déterminée par le module de calcul (22),
le module gestion (24) étant configuré pour transmettre l'information de pression calculée à l'unité de communication (38) seulement lorsque le module de gestion vérifie une condition de validation, **en ce que**
l'unité de communication (38) est configurée pour communiquer l'information de pression calculée au dispositif de surveillance (16) de pression seulement lorsque la condition de validation est vérifiée par le module de gestion (24), et **en ce que** la cellule de mesure (20), le module de calcul (22) et le module de gestion (24) sont disposés dans le boitier (18).

2. Dispositif de mesure (14) selon la revendication 1, dans lequel le module de gestion (24) vérifie la condition de validation seulement :
- lorsque le module de gestion (24) détermine que l'information de pression calculée est conforme à au moins un critère principal prédéterminé ; et/ou
- lorsque le module de gestion (24) reçoit une commande de validation de la part du dispositif de surveillance de pression (16) par l'intermédiaire de l'unité de communication (38).

3. Dispositif de mesure (14) selon la revendication 1 ou 2, dans lequel le dispositif de mesure (14) comprend un module de stockage (26), le module de stockage (26) étant configuré pour stocker l'information de pression calculée déterminée par le module de calcul (22) et/ou les données de pression du liquide acquises par la cellule de mesure de pression (20).

4. Dispositif de mesure (14) selon l'une quelconque des revendications précédentes, dans lequel l'acquisition des données de pression par la cellule de mesure de pression (20) dépend de l'information de pression calculée et/ou de la vérification de la condition de validation.

5. Dispositif de mesure (14) selon la revendication 4, dans laquelle la fréquence d'acquisition des données de pression par la cellule de mesure de pression (20) dépend de l'information de pression calculée et/ou de la vérification de la condition de validation, la fréquence d'acquisition de données étant limitée à une fréquence d'acquisition maximale égale à 300 Hz.

6. Dispositif de mesure (14) selon l'une quelconque des revendications précédentes, dans lequel le dispositif de mesure (14) comprend une unité d'alimentation (39), le module de gestion (24) étant configuré pour commander la fourniture d'une alimentation électrique dudit dispositif de mesure (14) par l'unité d'alimentation (39) en fonction de l'information de pression calculée et/ou de la vérification de la condition de validation.

7. Dispositif de mesure (14) selon l'une quelconque des revendications précédentes, dans lequel l'unité de communication (38) est configurée pour communiquer avec le dispositif de surveillance (16) en utilisant une interface comprise dans la liste consistant en : interface filaire RS485, interface radio LORA, interface radio Sigfox et interface radio cellulaire.

8. Dispositif de mesure (14) selon l'une quelconque des revendications précédentes, dans lequel le boitier (18) est un boitier étanche.

9. Dispositif de mesure (14) selon l'une quelconque des revendications précédentes, dans lequel l'information de pression calculée comprend:
- une valeur de pression minimale acquise et/ou maximale acquise; et/ou
- une moyenne de pression acquise; et/ou
- une valeur booléenne résultant du franchissement de la pression acquise d'un seuil de pression prédéterminé.

10. Système de surveillance de pression (12) comprenant un dispositif de mesure de pression (14) selon l'une quelconque des revendications précédentes et un dispositif de surveillance de pression (16), le module de gestion (24) du dispositif de mesure de pression (14) transmettant l'information de pression calculée à l'unité de communication (38) du dispositif de mesure de pression (14) seulement lorsque le module de gestion (24) vérifie une condition de validation, l'unité de communication (38) communiquant l'information de pression calculée au dispositif de surveillance (16) de pression seulement lorsque la condition de validation est vérifiée par le module de gestion (24).
